# EUROPÄISCHE PATENTSCHRIFT

(11) **EP 3 556 091 B1**
(45) Veröffentlichungstag und Bekanntmachung des Hinweises auf die Patenterteilung: **15.03.2023**
(21) Anmeldenummer: 17829120.9
(22) Anmeldetag: 05.12.2017
(51) Int. Cl.: H04N 7/18, B60R 1/00, G06T 5/50, G06T 3/00

(54) **VORRICHTUNG UND VERFAHREN ZUM FUSIONIEREN VON BILDDATEN VON EINEM MULTIKAMERASYSTEM FÜR EIN KRAFTFAHRZEUG**
DEVICE AND METHOD FOR THE FUSION OF IMAGES FROM A MULTI-CAMERA SYSTEM FOR A MOTOR VEHICLE
DISPOSITIF ET PROCÉDÉ DE FUSION D'IMAGES D'UN SYSTÈME MULTI-CAMÉRA POUR UN VÉHICULE À MOTEUR

(30) Priorität: 14.12.2016 DE 102016224905
(43) Veröffentlichungstag der Anmeldung: 23.10.2019
(73) Patentinhaber: Continental Autonomous Mobility Germany GmbH, 85057 Ingolstadt (DE)
(72) Erfinder: FRIEBE, Markus, 95482 Gefrees (DE); SCHREPFER, Jörg, 96355 Tettau (DE); GARCIA MARQUES, Rodrigo, 90411 Nürnberg (DE); SIMON, Martin, 98593 Floh-Seligental (DE); ARBEITER, Georg, 96328 Küps (DE); MILZ, Stefan, 07929 Sallburg-Ebersdorf (DE)
(74) Vertreter: Continental Corporation
(86) Internationale Anmeldenummer: PCT/DE2017/200127
(87) Internationale Veröffentlichungsnummer: WO 2018/108214

(56) Entgegenhaltungen:
- US-A1- 2014 362 173
- US-A1- 2015 138 312

## Beschreibung

### Technisches Gebiet

Die vorliegende Erfindung betrifft Bildverarbeitungssysteme für Fahrerassistenzsysteme für Kraftfahrzeuge.

Insbesondere betrifft die vorliegende Erfindung eine Vorrichtung und ein Verfahren zum Fusionieren von Bilddaten von einem Multikamerasystem für ein Kraftfahrzeug.

### Technischer Hintergrund

Mehrkamerasysteme in Kraftfahrzeugen stellen eine erweiterte Erfassung des Umgebungsumfeldes dar als dies mit einer einzigen Kamera möglich wäre.

Es werden meist Multikamerasystem in Kraftfahrzeugen verbaut, so dass Kamerakonstellationen mit überlappende Sichten entstehen.

In heutigen Fahrzeug-basierten Surround-View-Systemen vorkommende überlappen Sichtbereiche der benachbarten Kameras werden häufig bereits bei der Produktion des Kraftfahrzeuges manuell konfiguriert.

Nachteilig ist, dass dies für jede Fahrzeugvariante immer eine manuelle Konfiguration erfordert und daher einen gewissen Zeitund Kostenaufwand erfordert.

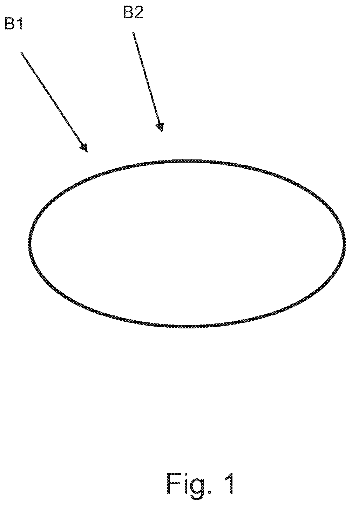

Die manuelle Konfiguration führt zu einer plötzlichen Änderung der Bildauflösung in den überlappenden Bildbereichen, d.h. es gibt ein so genanntes Fading von einer erhöhten Pixeldichte zu einer geringeren Pixeldichte, wie in Figur 1 dargestellt.

US 2015/138312 A1 beschreibt ein Verfahren, eine Vorrichtung und ein Surround-View-Kamerasystem, wobei das Verfahren die folgenden Schritte umfasst: das Extrahieren von Blockproben aus mindestens einem aus einer geometrischen Nachschlagetabelle für eine zusammengesetzte Ansicht, das Eingeben von einem Fischaugenbild und einem Überlappungsbereich, das Auswählen von Proben aus den extrahierten Blockproben, das Schätzen der optimalen Farbverstärkung für die ausgewählten Blockproben, das Durchführen einer Feineinstellung basierend auf der geschätzten Farbverstärkung und das Anwenden einer Farbwandlung sowie das Erzeugen eines zusammengesetzten Surround-View-Bildes.

### Zusammenfassung der Erfindung

Es ist eine Aufgabe der vorliegenden Erfindung, eine verbesserte Vorrichtung und ein verbessertes Verfahren zum Fusionieren von Bilddaten von einem Multikamerasystem für ein Kraftfahrzeug bereitzustellen.

Diese Aufgabe wird durch die Gegenstände der unabhängigen Patentansprüche gelöst. Weiterbildungen und Ausführungsformen sind den abhängigen Patentansprüchen, der Beschreibung und den Figuren der Zeichnungen zu entnehmen.

Ein erster Aspekt der vorliegenden Erfindung betrifft eine Vorrichtung zum Fusionieren von Bilddaten von einem Multikamerasystem für ein Kraftfahrzeug. Die Vorrichtung umfasst eine Bildanalyseeinrichtung, eine Erfassungseinrichtung, und eine Rechnereinrichtung.

Die Bildanalyseeinrichtung ist dazu ausgebildet, Teilbereiche eines Überlappungsbereiches von mindestens zwei Kameras des Multikamerasystems zu definieren. Dabei werden die Teilbereiche für jede Einzelbildaufnahme von jeder Kamera und für jeden Teilbereich einzeln gebildet.

Die Erfassungseinrichtung ist dazu ausgebildet, Pixeldichten der Teilbereiche des Überlappungsbereiches zu erfassen.

Die Rechnereinrichtung ist dazu ausgebildet, Abweichungen der Pixeldichten zu ermitteln und benachbarte Teilbereiche mit Abweichungen unter einem Schwellenwert für eine Gesamtbildüberlagerung auszuwählen.

Die vorliegende Erfindung ermöglicht vorteilhaft, eine verbesserte Bilddatenfusionierung durchzuführen, indem intrinsische und extrinsische Kameradaten geschätzt werden und automatisch Teilbereiche mit gleichen - zumindest annährend gleichen, wie durch den Schwellenwert vorgebbar - Pixeldichtewerten ausgewählt. Dabei können primär benachbarte Teilbereiche auf Pixeldichten geprüft werden.

Die Bildauflösung ändert sich daher in den überlappenden Bereichen weniger und Fusionierungsartefakte werden verringert.

Ein weiterer zweiter Aspekt der vorliegenden Erfindung betrifft ein Kraftfahrzeug mit einem Multikamerasystem und einer Vorrichtung nach dem ersten Aspekt oder nach einer beliebigen Ausführungsform des ersten Aspektes.

Ein weiterer Aspekt der vorliegenden Erfindung betrifft ein Verfahren zum Fusionieren von Bilddaten von einem Multikamerasystem für ein Kraftfahrzeug. Das Verfahren umfasst die folgenden Verfahrensschritte:
Als ein erster Schritt des Verfahrens erfolgt ein Definieren (von Teilbereichen eines Überlappungsbereiches von mindestens zwei Kameras des Multikamerasystems.

Als einen weiteren, zweiten Schritt umfasst das Verfahren ein Erfassen von Pixeldichten der Teilbereiche des Überlappungsbereiches.

Als einen weiteren, dritten Schritt umfasst das Verfahren ein Ermitteln von Abweichungen der Pixeldichten und Auswählen von benachbarten Teilbereichen für eine Gesamtbildüberlagerung, wobei die ausgewählten, benachbarten Teilbereiche Abweichungen unter einem Schwellenwert aufweisen.

Vorteilhafte Ausgestaltungen der vorliegenden Erfindung sind den Unteransprüchen zu entnehmen.

In einer vorteilhaften Ausführungsform der vorliegenden Erfindung ist vorgesehen, dass die Rechnereinrichtung dazu ausgelegt ist, die Gesamtbildüberlagerung der Bilddaten der mindestens zwei Kameras des Multikamerasystems durchzuführen.

Dies ermöglicht vorteilhaft, eine verbesserte Fusionierung der Bilddaten des Multikamerasystems für das Kraftfahrzeug bereitzustellen.

In einer weiteren vorteilhaften Ausführungsform der vorliegenden Erfindung ist vorgesehen, dass die Erfassungseinrichtung dazu ausgelegt ist, als die Pixeldichten die von einem Teilbereich abgedeckte Fläche pro Flächeneinheit auf einem Bildsensor der mindestens zwei Kameras zu erfassen.

Dies ermöglicht vorteilhaft, eine Bildartefakte des fusionieren Gesamtbildes zu vermeiden.

In einer weiteren vorteilhaften Ausführungsform der vorliegenden Erfindung ist vorgesehen, dass die Rechnereinrichtung dazu ausgelegt ist, als die Gesamtbildüberlagerung ein Alpha-Blending der Bilddaten der mindestens zwei Kameras des Multikamerasystems durchzuführen.

Der Begriff "Alpha Blending" wie von der vorliegenden Erfindung verwendet beschreibt beispielsweise eine Technik in der Bildoder Videobearbeitung, bei der verschiedene Bilder zu einem Gesamtbild überlagert werden, wobei neben der Farbinformation auch der Alphakanal berücksichtigt werden kann.

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsformen beschriebenen Merkmale der vorliegenden Erfindung.

Die beiliegenden Zeichnungen sollen ein weiteres Verständnis der Ausführungsformen der vorliegenden Erfindung vermitteln.

Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

### Kurze Beschreibung der Figuren

Es zeigen:
- Fig. 1:: eine schematische Darstellung einer Bilddatenfusionierung zur Erläuterung der vorliegenden Erfindung;
- Fig. 2:: eine schematische Darstellung eines Multikamerasystems gemäß einem weiteren Ausführungsbeispiel der vorliegenden Erfindung;
- Fig. 3:: eine schematische Darstellung einer Vorrichtung zum Fusionieren von Bilddaten von einem Multikamerasystem für ein Kraftfahrzeug gemäß einem weiteren Ausführungsbeispiel der vorliegenden Erfindung; und
- Fig. 4:: eine schematische Darstellung eines Flussdiagramms eines Verfahrens zum Fusionieren von Bilddaten von einem Multikamerasystem für ein Kraftfahrzeug für ein Kraftfahrzeug gemäß einem weiteren Ausführungsbeispiel der vorliegenden Erfindung.

### Detaillierte Beschreibung der Ausführungsbeispiele

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

Bei dem Kraftfahrzeug bzw. Fahrzeug handelt es sich beispielsweise um ein Kraftfahrzeug oder um ein Hybridfahrzeug, beispielsweise ein Hybridfahrzeug mit Segelfunktion, beispielsweise ein Motorrad, ein Bus oder ein Lastkraftwagen oder ein Fahrrad.

Der Begriff "Pixeldichte" wie von der vorliegenden Erfindung verwendet, ist beispielsweise als Bildfläche von einem Teilbereich des Bildes pro Flächeneinheit auf einem Bildsensor, wie vom Bildsensor zum Abbilden der Bildfläche des Teilbereiches verwendet definiert.

Fahrerassistenzsysteme sind elektronische Zusatzeinrichtungen in Kraftfahrzeugen zur Unterstützung des Fahrers in bestimmten Fahrsituationen.

Die Fig. 1 zeigt eine schematische Darstellung einer Bilddatenfusionierung zur Erläuterung der vorliegenden Erfindung.

Die manuelle Konfiguration bei der Fusionierung von Bilddaten von Multikamerasystemen führt meist zu einer abrupten Änderung der Bildauflösung in den überlappenden Bildbereichen, d.h. es gibt ein so genanntes Fading von einer erhöhten Pixeldichte zu einer geringeren Pixeldichte, wie in Figur 1 dargestellt.

Die beiden Pfeile stellen Bereiche mit unterschiedlicher Pixeldichte dar. Beispielsweise ist ein erster Bereich B1 mit einer hohen Pixeldichte ausgebildet und ein benachbarter zweiter Bereich B2 mit einer verringerten Pixeldichte. Dies führt im Übergang zwischen den Einzelbildern wie von den Einzelkameras aufgenommen zu Bildartefakte bei der Fusionierung des Gesamtbildes.

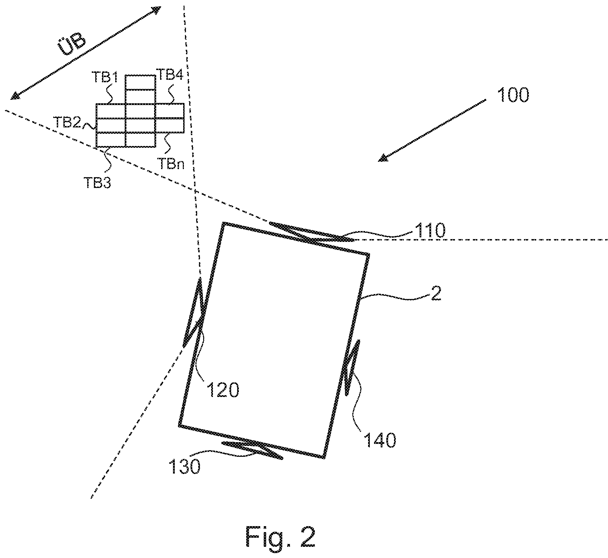

Die Fig. 2 zeigt eine schematische Darstellung eines Multikamerasystems gemäß einem weiteren Ausführungsbeispiel der vorliegenden Erfindung.

Das Kraftfahrzeug 2 umfasst ein Multikamerasystem 100 mit vier Kameras, eine erste Kamera 110, eine zweite Kamera 120, eine dritte Kamera 130 und eine vierte Kamera 140.

Die Kameras 110, 120, 130, 140 haben dabei unterschiedliche, jedoch zumindest teilweise sich überlappende Sichtbereiche, wie durch gestrichelte Linien dargestellt.

Der Überlappungsbereich ÜB der Sichtbereiche der ersten Kamera 110 und der zweiten Kamera 120 kann dabei in Teilbereiche TB1, TB2, ..., TBn unterteilt werden.

Die Teilbereiche TB1, TB2, ..., TBn können auch Subregionen genannt werden. Die Teilbereiche TB1, TB2, ..., TBn können dabei für jede Kamera, d.h. wie dargestellt für die erste Kamera 110 und die zweite Kamera 120 gebildet werden.

In anderen Worten ausgedrückt, sowohl der Sichtbereich der ersten Kamera 110 wird innerhalb des Überlappungsbereich ÜB in Teilbereiche TB1, TB2, ..., TBn unterteilt also auch der Sichtbereich der zweiten Kamera 120.

Das Gesamtbild als Fusion der Sichtbereiche ergibt beispielsweise ein Surround-View oder ein Rund-um-Sicht-Abbild.

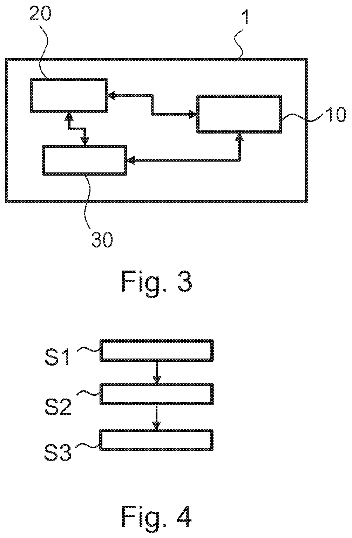

Die Fig. 3 zeigt eine schematische Darstellung einer Vorrichtung zum Fusionieren von Bilddaten von einem Multikamerasystem für ein Kraftfahrzeug gemäß einem weiteren Ausführungsbeispiel der vorliegenden Erfindung.

Die Vorrichtung 1 zum Fusionieren von Bilddaten von einem Multikamerasystem 100 für ein Kraftfahrzeug 2 umfasst eine Bildanalyseeinrichtung 10, eine Erfassungseinrichtung 20 und eine Rechnereinrichtung 30.

Die Bildanalyseeinrichtung 10 ist dazu ausgebildet, Teilbereiche TB1, TB2, ..., TBn eines Überlappungsbereiches ÜB von mindestens zwei Kameras 110, 120 des Multikamerasystems 100 zu definieren.

Die Erfassungseinrichtung 20 ist dazu ausgebildet, Pixeldichten der Teilbereiche TB1, TB2, ..., TBn des Überlappungsbereiches ÜB erfassen.

Die Rechnereinrichtung 30 ist dazu ausgebildet, Abweichungen der Pixeldichten zu ermitteln und benachbarte Teilbereiche TB1, TB2, ..., TBn mit Abweichungen unter einem Schwellenwert für eine Gesamtbildüberlagerung auszuwählen.

Die Fig. 4 zeigt eine schematische Darstellung eines Flussdiagramms eines Verfahrens zum Fusionieren von Bilddaten von einem Multikamerasystem für ein Kraftfahrzeug für ein Kraftfahrzeug gemäß einem weiteren Ausführungsbeispiel der vorliegenden Erfindung.

Das Verfahren umfasst die folgenden Verfahrensschritte:
Als ein erster Schritt des Verfahrens erfolgt ein Definieren S1 von Teilbereichen TB1, TB2, ..., TBn eines Überlappungsbereiches ÜB von mindestens zwei Kameras 110, 120 des Multikamerasystems 100.

Als ein zweiter Schritt des Verfahrens erfolgt ein Erfassen S2 von Pixeldichten der Teilbereiche TB1, TB2, ..., TBn des Überlappungsbereiches ÜB.

Als ein dritter Schritt des Verfahrens erfolgt ein Ermitteln S3 von Abweichungen der Pixeldichten und ein Auswählen von benachbarten Teilbereichen TB1, TB2, ..., TBn für eine Gesamtbildüberlagerung, wobei die ausgewählten, benachbarten Teilbereiche Abweichungen unter einem Schwellenwert aufweisen.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Vorrichtung (1) zum Fusionieren von Bilddaten von einem Multikamerasystem (100) für ein Kraftfahrzeug, wobei die Bilddaten Daten eines überlappenden Sichtbereiches (ÜB) von mindestens zwei Kameras des Multikamerasystems umfassen, die Vorrichtung (1) aufweisend:
- eine Bildanalyseeinrichtung (10), welche dazu ausgebildet ist, Teilbereiche (TB1, TB2, ..., TBn) des in den Bilddaten abgebildeten überlappenden Sichtbereichs (ÜB) zu definieren;
- eine Erfassungseinrichtung (20), welche dazu ausgebildet ist, eine jeweilige Pixeldichte für jeden der Teilbereiche (TB1, TB2, ..., TBn) des überlappenden Sichtbereiches (ÜB) zu erfassen, wobei die Erfassungseinrichtung (20) dazu ausgelegt ist, als Pixeldichte die von einem Teilbereich (TB1, TB2, ..., TBn) abgedeckte Fläche pro Flächeneinheit auf einem Bildsensor einer der beiden Kameras (110, 120) zu erfassen; und
- eine Rechnereinrichtung (30), welche dazu ausgebildet ist, Abweichungen der Pixeldichten von benachbarten Teilbereichen (TB1, TB2, ..., TBn) zu ermitteln und benachbarte Teilbereiche (TB1, TB2, ..., TBn) mit Abweichungen unter einem Schwellenwert für eine Gesamtbildüberlagerung auszuwählen, wobei die Rechnereinrichtung (30) dazu ausgelegt ist, die Gesamtbildüberlagerung der Bilddaten der mindestens zwei Kameras des Multikamerasystems basierend auf einer Fusionierung der ausgewählten Teilbereiche durchzuführen.

2. Vorrichtung (1) nach Anspruch 1, wobei die Rechnereinrichtung (30) dazu ausgelegt ist, als die Gesamtbildüberlagerung ein Alpha Blending der Bilddaten der mindestens zwei Kameras (110, 120) des Multikamerasystems durchzuführen.

3. Vorrichtung (1) nach Anspruch 1 oder 2, wobei die Vorrichtung weiterhin ein Multikamerasystem mit mindestens zwei Kameras aufweist, die jeweils eingerichtet sind, die Bilddaten des überlappenden Sichtbereiches zu erzeugen.

4. Kraftfahrzeug, umfassend ein Multikamerasystem und eine Vorrichtung nach Anspruch 1 oder 2.

5. Verfahren zum Fusionieren von Bilddaten von einem Multikamerasystem (100) für ein Kraftfahrzeug, wobei die Bilddaten Daten eines überlappenden Sichtbereiches (ÜB) von mindestens zwei Kameras des Multikamerasystems umfassen, aufweisend die folgenden Verfahrensschritte:
- Definieren (S1) von Teilbereichen (TB1, TB2, ..., TBn) des in den Bilddaten abgebildeten überlappenden Sichtbereichs (ÜB);
- Erfassen (S3) einer jeweiligen Pixeldichte für jeden der Teilbereiche (TB1, TB2, ..., TBn), wobei als Pixeldichte die von einem Teilbereich (TB1, TB2, ..., TBn) abgedeckte Fläche pro Flächeneinheit auf einem Bildsensor der mindestens zwei Kameras (110, 120) erfasst wird.; und
- Ermitteln (S3) von Abweichungen der Pixeldichten von benachbarten Teilbereichen (TB1, TB2, ..., TBn), und Auswählen von benachbarten Teilbereichen (TB1, TB2, ..., TBn), welche Abweichungen der Pixeldichte unter einem Schwellwert aufweisen, für eine Gesamtbildüberlagerung, und Durchführen der Gesamtbildüberlagerung der Bilddaten der mindestens zwei Kameras des Multikamerasystems basierend auf einer Fusionierung der ausgewählten Teilbereiche (TB1, TB2, ..., TBn), um ein Gesamtbild zu erhalten.

## Claims

1. Apparatus (1) for fusing image data from a multi-camera system (100) for a motor vehicle, wherein the image data comprise data of an overlapping field of view (ÜB) of at least two cameras of the multi-camera system, the apparatus (1) comprising:
- an image analysis device (10) configured to define sub-regions (TB1, TB2, ..., TBn) of the overlapping field of view (ÜB) represented in the image data;
- an acquisition device (20) configured to acquire a respective pixel density for each of the sub-regions (TB1, TB2, ..., TBn) of the overlapping field of view (ÜB), wherein the acquisition device (20) is designed to acquire as pixel density the area covered by a sub-region (TB1, TB2, ..., TBn) per unit area on an image sensor of one of the two cameras (110, 120); and
- a computer device (30) configured to determine deviations of the pixel densities of adjacent sub-regions (TB1, TB2, ..., TBn) and to select adjacent sub-regions (TB1, TB2, ..., TBn) having deviations below a threshold value for a total image overlay, wherein the computer device (30) is designed to carry out the total image overlay of the image data of the at least two cameras of the multi-camera system on the basis of fusing the selected sub-regions.

2. Apparatus (1) according to Claim 1, wherein the computer device (30) is designed to carry out an alpha blending of the image data of the at least two cameras (110, 120) of the multi-camera system as the total image overlay.

3. Apparatus (1) according to Claim 1 or 2, wherein the apparatus furthermore comprises a multi-camera system having at least two cameras which are each set up to generate the image data of the overlapping field of view.

4. Motor vehicle, comprising a multi-camera system and an apparatus according to Claim 1 or 2.

5. Method for fusing image data from a multi-camera system (100) for a motor vehicle, wherein the image data comprise data of an overlapping field of view (ÜB) of at least two cameras of the multi-camera system, comprising the following method steps:
- defining (S1) sub-regions (TB1, TB2, ..., TBn) of the overlapping field of view (ÜB) represented in the image data;
- acquiring (S3) a respective pixel density for each of the sub-regions (TB1, TB2, ..., TBn) wherein the area covered by a sub-region (TB1, TB2, ..., TBn) per unit area on an image sensor of the at least two cameras (110, 120) is acquired as pixel density; and
- determining (S3) deviations of the pixel densities of adjacent sub-regions (TB1, TB2, ..., TBn) and selecting adjacent sub-regions (TB1, TB2, ..., TBn) having deviations of the pixel density below a threshold value for a total image overlay, and carrying out the total image overlay of the image data of the at least two cameras of the multi-camera system on the basis of fusing the selected sub-regions (TB1, TB2, ..., TBn) in order to obtain a total image.

## Revendications

1. Arrangement (1) pour fusionner des données d'image d'un système à caméras multiples (100) pour un véhicule automobile, les données d'image comportant des données d'une zone de vision (ÜB) en chevauchement d'au moins deux caméras du système à caméras multiples, l'arrangement (1) comprenant :
- un dispositif d'analyse d'images (10), lequel est configuré pour définir des zones partielles (TB1, TB2, ..., TBn) de la zone de vision (ÜB) en chevauchement représentée dans les données d'image ;
- un dispositif d'acquisition (20), lequel est configuré pour acquérir une densité de pixels respective pour chacune des zones partielles (TB1, TB2, ..., TBn) de la zone de vision (ÜB) en chevauchement, le dispositif d'acquisition (20) étant conçu pour acquérir en tant que densité de pixels la surface recouverte par une zone partielle (TB1, TB2, ..., TBn) par unité de surface sur un capteur d'image de l'une des deux caméras (110, 120) ; et
- un dispositif de calcul (30), lequel est configuré pour déterminer les écarts des densités de pixels de zones partielles (TB1, TB2, ..., TBn) voisines et sélectionner les zones partielles (TB1, TB2, ..., TBn) ayant des écarts inférieurs à une valeur de seuil pour une superposition d'image totale, le dispositif de calcul (30) étant conçu pour effectuer la superposition d'image totale des données d'image des au moins deux caméras du système à caméras multiples en se basant sur une fusion des zones partielles sélectionnées.

2. Arrangement (1) selon la revendication 1, le dispositif de calcul (30) étant conçu pour effectuer, en tant que superposition d'image totale, une simulation de transparence des données d'image des au moins deux caméras (110, 120) du système à caméras multiples.

3. Arrangement (1) selon la revendication 1 ou 2, l'arrangement possédant en outre un système à caméras multiples pourvu d'au moins deux caméras, lesquelles sont respectivement conçues pour générer les données d'image de la zone de vision en chevauchement.

4. Véhicule automobile comprenant un système à caméras multiples et un arrangement selon la revendication 1 ou 2.

5. Procédé pour fusionner des données d'image d'un système à caméras multiples (100) pour un véhicule automobile, les données d'image comportant des données d'une zone de vision (ÜB) en chevauchement d'au moins deux caméras du système à caméras multiples, comprenant les étapes suivantes :
- définition (S1) de zones partielles (TB1, TB2, ..., TBn) de la zone de vision (ÜB) en chevauchement représentée dans les données d'image ;
- acquisition (S3) d'une densité de pixels respective pour chacune des zones partielles (TB1, TB2, ..., TBn), la densité de pixels acquise étant la surface recouverte par une zone partielle (TB1, TB2, ..., TBn) par unité de surface sur un capteur d'image des au moins deux caméras (110, 120) ; et
- détermination (S3) d'écarts des densités de pixels de zones partielles (TB1, TB2, ..., TBn) voisines et sélection de zones partielles (TB1, TB2, ..., TBn) qui présentent des écarts des densités de pixels inférieurs à une valeur de seuil, pour une superposition d'image totale, puis réalisation de la superposition d'image totale des données d'image des au moins deux caméras du système à caméras multiples en se basant sur une fusion des zones partielles (TB1, TB2, ..., TBn) sélectionnées afin d'obtenir une image totale.
